# EUROPÄISCHE PATENTANMELDUNG

(11) **EP 0 625 494 A1**
(43) Veröffentlichungstag der Anmeldung: **23.11.1994**
(21) Anmeldenummer: 94250093.5
(22) Anmeldetag: 14.04.1994
(51) Int. Cl.: C05F 9/00, C05F 3/00

(54) **Verfahren zur Aufbereitung von als Bio-Wertstoffe anfallenden, aus pflanzlichen Stoffen bestehenden Abfallprodukten und von aus pflanzlichen Stoffen hergestellten Produkten, insbesondere Nahrungsmittelabfällen, zu wiederverwertbaren Stoffen**

(30) Priorität: 15.04.1993 DE 4312923
(71) Anmelder: LOOKS NAHRUNGSMITTEL RECYCLING GmbH, D-13503 Berlin (DE)
(72) Erfinder: Looks, Michael, D-13505 Berlin (DE)
(74) Vertreter: Burghardt, Rosemarie, Dipl.-Jur.

(57) **Zusammenfassung**

Die Erfindung wird im System der Wiedergewinnung von verwertbaren Stoffen aus Abfällen wirksam und betrifft die Verwertung von vorwiegend in Haushaltungen anfallenden und aus pflanzlichen oder daraus hergestellten Produkten bestehenden Bio-Wertstoffen.

Die Erfindung löst die Aufgabe, ein Verfahren zur Aufbereitung von Bio-Wertstoffen zu entwickeln dadurch, daß vorgeschlagen wird, den anfallenden Bio-Wertstoff nach Zerkleinerung einer Wärmebehandlung zu unterziehen bei gleichzeitiger Trocknung mit nachfolgender Vermahlung oder Trennung der Substanz in eine Abfallfraktion und in eine verwertbare Fraktion.

Mit dem erfindungsgemäßen Verfahren wird zu wirtschaftlich günstigen Bedingungen anfallender Bio-Wertstoff zu wiederverwertbaren Substanzen verarbeitet.

## Beschreibung

Die Erfindung wird bei der Verwertung bzw. Aufbereitung von vorwiegend pflanzlichen und aus pflanzlichen Stoffen hergestellten Produkten aus dem Abfall von Haushaltungen sowie aus gärtnerischen oder landwirtschaftlichen Betrieben und von nicht mehr zum Verzehr geeigneten Nahrungsmitteln aus Industrie und Handel eingesetzt.

In Haushaltungen und sowie in gärtnerisch und landwirtschaftlich betriebenen Einrichtungen anfallende pflanzliche oder aus pflanzlichen Stoffen bestehende Abfallprodukte wurden teilweise als Futtermittel für die Aufzucht und Haltung von Nutztieren verwendet. Der Einsatz von solchen Abfallprodukten hat Grenzen, da vorwiegend die in Haushaltungen anfallenden Abfälle mit Nebenprodukten, insbesondere bestehend aus Verpackungsmaterial, belastet sind und deshalb zur Gewinnung von Futtermitteln für die Tierhaltung wenig geeignet sind. Anderseits fällt mengenmäßig mehr Anfallmaterial an, das zu Futtermitteln verarbeitet werden könnte, als für Tierhaltung verwertbar ist.

Eine weitere Möglichkeit, Abfallprodukte einem Wiederverwendungszweck zuzuführen, besteht in dem bekannten Kompostieren derselben.

Auf dem Gebiet der Kompostherstellung gab es mehrere markante Entwicklungsphasen. Seit Beginn unseres Jahrhunderts ist die Kompostierung eine Lieblingsbeschäftigung der Gartenbesitzer. Diese bringen Garten- und Küchenabfälle als Wertstoffe wiederum zurück in den natürlichen Kreislauf. Aufbau sowie Umschichten der Kompostmieten erfolgen von Hand, wobei eine große Vielfalt an Methoden, Zutaten, Zeitabläufen usw. bis heute erarbeitet und empfohlen wurden und werden.

Der Zwang zur Werterhaltung der kompostierbaren, von der Öffentlichkeit gesammmelten sogenannten "Abfälle" führte bald zu einer Mechanisierung für die großen, von Hand nicht mehr bewältigbaren Mengen an Kompost. Nach 1945 kam eine Tendenz auf, baumaschinenartige Geräte für die Herstellung und Umschichtung der aus Kompost errichteten Mieten einzusetzen, sogar in der Form der bekannten Schaufellader.

Da die Kompostreifung ein vorwiegend biologischer Vorgang ist, war mit der mechanischen Bearbeitung bzw. der entsprechenden Umschichtung der Kompostmaterialien mittels Schaufellader ein entsprechender Mißerfolg gleichsam "vorprogrammiert". Die erhaltenen Komposterden waren in der Mehrzahl derart inakzeptabel, daß sich vielerorts eine bis heute andauernde Ablehnung gegenüber der Kompostherstellung einstellte.

In der Folge bemühte sich die Fachwelt, Verfahren für biologisch zweckmäßigere Kompostbereitungen zu entwickeln. Um die Verfahrenskosten gering zu halten, wurden eine Vielfalt an stark forcierten biologischen Abbauprozessen entwickelt. Die vorgeschlagenen Bio-Reaktoren fanden jedoch nur geringe Verbreitung.

Die jüngste Vergangenheit ist gekennzeichnet durch zwei an sich analoge Lösungswege. Der eine, der mehr für Kleinanlagen geeignet ist, benutzt die altbekannten Dreiecksmieten. Diese werden mittels Umsetzmaschinen umgeschichtet. Dabei wird jede unnötige Produktpressung vermieden, es wird sogar das Produkt beim Umsetzen jeweils frisch gelockert. Der große Vorteil dieser Methode liegt darin, daß der Kompostanlagenwert in größerem Maßstab gezielt den Rotteablauf beeinflussen kann, durch Wahl der Höhe der Mieten, Umschichtzyklus, Wasserzugabe, Vermischung mit verschiedenen Stoffen usw.. Dieser Vorteil ist aber gleichzeitig auch ein Hauptnachteil. Die optimale Rotteführung stellt hohe Anforderungen an die verantwortlichen und durchführenden Fachleute und setzt somit einen hohen Ausbildungsstand voraus. Die Arbeitsbedingungen im Umfeld der Verrottung sind bekanntlich unangenehm, besonders wegen Geruchsbelästigung, so daß in den wenigsten Fällen die Personen, die die notwendigen beruflichen Voraussetzungen haben, auch bereit sind, diese Arbeit zu übernehmen. Entweder müßte die Person über große praktische Begabung, wie z.B. ein erfahrener Gärtner, oder aber über ein hohes Maß an Biologiekenntnissen verfügen. Die Bestrebungen liegen zur Zeit darin, die Herstellung von Kompost biologisch richtig, aber doch weitgehendst mechanisiert durchzuführen. Beanstandet wird, daß die entsprechenden mechanischen Lösungen den biologischen Abläufen noch nicht genügend Rechnung tragen. Der biologische Prozeß während der Hauptverrottung ergibt eine Volumenreduk tion von bis zu 50 % innerhalb weniger Wochen. Besonders dann, wenn die Anlagen im Nahbereich menschlicher Siedlungen angeordnet sind, muß Geruchsemission vermieden werden. Dies verlangt eine vollständige Einhausung der Kompostieranlage sowie Reinigung der Abluft. Für eine bessere Kontrolle des biologischen Abbaus ist es oft vorteilhaft, zusätzlich das Rottesystem zu durchlüften, so daß solche Anlagen verhältnismäßig große Investitionen erfordern. Wird im ersten Bereich der Rotte die Primärmiete z.B. auf eine Höhe von 2,5 m aufgeschichtet, ergibt der Rotteschwund bei Kompostreife noch eine Mietenhöhe von 1,25 m. Der teuer umbaute Raum wird auf diese Weise schlecht genutzt. Diese Art von mechanisierten Betrieb weist somit wiederum Nachteile auf gegenüber dem vorgenannten Maschinen-Umschichten durch den Anlagenwart.

Ein weiterer Nachteil ergibt sich daraus, daß beispielsweise in den Großstädten sehr viel Abfallstoffe anfallen, die durch die Verrottung in Mieten nicht mehr verarbeitet werden können und daraus, daß die Dauer der Verrottung in Mieten 8 bis 12 Monate beträgt. Zunehmend stößt die Mietenkompostierung auf Kritik bei Kommunalpolitikern und Umweltschützern. Neben der zwangsweisen Geruchsemission tritt eine Sickerwasseremission und ein gewaltiger Ungeziefer-Befall auf. Die Einhaltung strenger Umweltbestimmungen erhöht weiterhin die Investitionskosten für Kompostieranlagen, da zur Verhinderung einer Sickerwasserbelastung eine wannenartige Abdichtung der Mieten gegenüber dem Erdstoff vorgenommen werden muß. Das aufgefangene Sickerwasser muß dann umweltverträglich entsorgt werden. Letztlich wird mehr Kompost erzeugt, als der einschlägige Markt aufzunehmen vermag.

Eine weitere Möglichkeit, die in großen Mengen in Haushaltungen, Industrie und in gärtnerischen, landwirtschaftlichen Einrichtungen anfallenden Abfallprodukte aus pflanzlichen Stoffen in unverarbeiteter und verarbeiteter Form zu beseitigen, besteht in der Verbrennung mittels Müllverbrennungsanlagen. Hierbei werden wichtige Rohstoffe nutzlos entsorgt und dem Prozeß der Wiederverwertbarkeit, z.B. als Dünger oder Futtermittel entzogen.

Die Erfindung zielt folglich darauf ab, die Kosten bei der Beseitigung von biologisch abbaubaren Abfallstoffen pflanzlicher Herkunft zu senken und daraus Produkte durch eine Verwertung dieser Abfallstoffe herzustellen, die kostengünstig auf dem Markt angeboten werden können.

Der Erfindung liegt die Aufgabe zugrunde, ein Verfahren zur Aufbereitung und Verwertung von als Bio-Wertstoff anfallenden Abfallstoffen zu einem Futtermittel, oder zu einem organischen Wertstoffgemisch, das zur Bodenverbesserung in der Landwirtschaft eingesetzt werden kann, oder zu Bio-Brennstoffen zu entwickeln.

Diese Aufgabe wurde dadurch gelöst, daß ein Verfahren zur Aufbereitung von vorwiegend im kommunalen Bereich durch Bio-Abfallsammlungen als Bio-Wertstoffe anfallenden, aus überwiegend pflanzlichen Stoffen bestehenden Abfallprodukten und von aus pflanzlichen Stoffen hergestellten und für die menschliche Ernährung nicht mehr verwendbaren Produkten zu wiederverwertbaren Stoffen entwickelt wurde, bei den erfindungsgemäß der angelieferte Bio-Wertstoff vor seiner Verarbeitung zerkleinert wird. Diesem zerkleinerten Bio-Wertstoff werden, abhängig von dem Wassergehalt desselben, biologische Trägerstoffe in einer vorherbestimmbaren Menge beigemischt. Anschließend wird der Wassergehalt dieser Mischsubstanz durch Wärmeeinwirkung auf 8 % bis 10 % Prozent reduziert. Die getrocknete Mischsubstanz aus eingesetzten Bio-Wertstoffen und zugesetzten Bio-Trägerstoffen wird anschließend vermahlen und darauffolgend wird die vermahlene Mischsubstanz über Metallabscheider, Windsichter und Trockensiebe geführt sowie in getrennte Fraktionen ihrer verwertbaren und nicht verwertbaren Bestandteile zerlegt. Alternativ wird diese gestellte Aufgabe auch durch ein Verfahren gelöst, bei dem bei gleichen Verfahrensschritten die Zumischung eines biologischen Trägerstoffes entfällt. Die Entscheidung hierüber, ob ein biologischer Trägerstoff dem eingesetzten Bio-Wertstoff beizumischen ist, wird in Abhängigkeit von dem Wassergehalt des einzusetzenden Bio-Wertstoffes bestimmt.

Die gewonnene verwertbare Fraktion aus diesem erfindungsgemäßen Verfahren kann in zermahlenem Zustand oder granuliert der Weiterverwendung/Wiederverwendung zugeführt werden. Die gewonnene und verwertbare Fraktion als Endprodukt des erfindungsgemäßen Verfahrens dient als Zuschlagstoff zusammen mit Stalldung oder Gülle in der Landwirtschaft als Dünger zur Bodenverbesserung. Während des erfindungsgemäßen Verfahrens wird die eingesetzte Bio-Wertstoffmasse einer Wärmeeinwirkung unterzogen und hierdurch biologisch stabilisiert, d.h. diese Substanz wird entkeimt und Kleinstlebewesen werden abgetötet. Dadurch eignet sich diese vorwiegend aus pflanzlichen Stoffen bestehende, eingesetzte Bio-Wertstoffmasse nach der verfahrensgemäßen Behandlung auch als Tierfutter. Das Endprodukt aus der Anwendung des erfindungsgemäßen Verfahrens besitzt einen hohen Wärmeinhalt, der sich bei ca. 13000 bis 15000 Kjoul bewegt, und eignet sich als Brennstoff für Großfeuerungsanlagen mit dem Vorteil, daß dieser Brennstoff CO₂-neutral ist.

Die Anwendung des erfindungsgemäßen Verfahrens zeigt gegenüber dem bekannten Stand der Technik hinsichtlich der Verwertung von biologischen Wertstoffen erhebliche Vorteile, die darin bestehen, daß die Geruchsbelästigung bei der Verwertung stark reduziert ist, ein Ungezieferbefall nahezu ausgeschlossen wird und kein Anfall von belasteten Abwässern besteht. Das Verfahren liefert in kürzester Zeit ein verwertbares Endprodukt, das in den biologischen Kreislauf zurückgeführt werden kann. Durch die Anwendung des erfindungsgemäßen Verfahrens bei der Verwertung von Bio-Wertstoffen beschriebener Art wird erreicht, daß die Flächenbelastung während der Behandlung stark reduziert wird, da dieses eingesetzte Material keine lange Verweilzeit während der Verarbeitung erfährt; außerdem hat das Endprodukt eine erhöhte Lagerfähigkeit. Dieser Vorteil ist darauf zurückzuführen, daß das Endprodukt nach dem erfindungsgemäßen Verfahren einen geringen Wasserhaushalt aufweist und infolge der Wärmebehandlung biologisch stabilisiert worden ist.

Die biologischen Wertstoffe, die vorher teilweise und eingeschränkt nur unmittelbar nach Anfall als Futtermittel oder nach einer Kompostierung als Düngemittel verwendet wurden, können jetzt als Endprodukt des erfindungsgemäßen Verfahrens beliebig auch nach einer längeren Lagerzeit eingesetzt werden.

Nach dem erfindungsgemäßen Verfahren besteht eine alternative breitere Verwendungsmöglichkeit des Endproduktes. Es dient als Futtermittel, als Düngemittel oder als Bio-Heizmaterial. Letztlich ist auch eine Reduzierung der Umweltbelastung durch anfallende Bio-Wertstoffe als Vorteil des erfindungsgemäßen Verfahrens auszuweisen. Die Aufarbeitung des angefallenden Bio-Wertstoffes erfolgt nach dem erfindungsgemäßen Verfahren in einer sehr kurzen Zeit, die ca. 40 Minuten beträgt. Gegenüber dem Stand der Technik, bei dem die Verweilzeit bei einer Kompostierung 8 bis 12 Monate beträgt, ergibt sich hieraus ein weiterer Vorteil hinsichtlich der Unweltbelastung bei Anwendung des erfindungsgemäßen Verfahrens. Der nach der Anwendung des erfindungsgemäßen Verfahrens anfallende, unverwertbare Bestandteil des eingesetzten Bio-Wertstoffes als ausgesonderte Fraktion ist mengenmäßig sehr gering. Dieser reduzierte Anfall von sogenannten Restmüll kann auf einer normalen Deponie abgelagert werden. Die Gefahr einer Umweltbelastung geht von dem aus diesem Verfahren entstehenden dem Restmüll nicht hervor, wobei die anfallende Menge desselben äußerst gering und nur auf die nicht verwertbaren Fraktionen beschränkt ist.

Letztlich gliedert sich dieses erfindungsgemäße Verfahren in das kommunale Recycling-System für vorwiegend in Ballungsgebieten in großen Mengen anfallende, wiederverwertbare Abfälle ein. Dabei schließt das Verfahren an das im kommunalen Bereich bereits eingeführte bzw. noch einzuführende System des organisierten Sammelns der Bio-Abfälle von Haushaltungen mittels speziell zu diesem Zweck aufgestellter "Bio-Tonnen" an. Hierdurch kann der Kreislauf zwischen Aufkommen und erforderlicher Wiederverwertung solcher Bio-Wertstoffe mittels des erfindungsgemäßen Verfahrens geschlossen werden.

Die Erfindung soll nachfolgend an einen Ausführungsbeispiel näher erläutert werden. Die zugehörige Zeichnung zeigt ein technologisches Schema zur Verwirklichung des Verfahrens.

Nach Anlieferung des Bio-Wertstoffes als ein Gemisch, bestehend aus pflanzlichen Stoffen, aus pflanzlichen Stoffen hergestellten, aber für die menschliche Ernährung nicht mehr zugelassenen Nahrungsmitteln, Nahrungsmittelabfällen und Lebensmittelrückständen mit einem geringen, unter 9 % liegenden Bestandteil von tierischen Stoffen, wird dieser einem Annahmedosierer (1) zugeführt. Der angenommene und dosierte Bio-Wertstoff wird über einen Förderer (2) einem Magnetabscheider mit Schredder (3) zugeführt. Über einen Bandförderer (4) mit Egalisator und integrierter Bandwaage gelangt der Bio-Wertstoff zum Feuchtigkeitsentzug in einen mit einer Brennstoffbeschickung (6) ausgerüsteten Drehtrommelofen (7). Zur Verhinderung der Umweltbelastung durch bei der Trocknung freigesetzte Schadstoffe ist dem Drehtrommel-Trockner (7) eine Multizyklonanlage (8) nachgeordnet, die über ein Saug-Druck gebläse beaufschlagt wird. Der getrocknete und gleichzeitig durch Wärmebehandlung biologisch stabilisierte Bio-Wertstoff wird nach Austragung aus dem Drehtrommel-Trockner (7) einem Schneckenförderer (9) aufgegeben, der den getrockneten Bio-Wertstoff einem Bandförderer mit integrierter Bandwaage zuführt. Von hier aus gelangt der getrocknete Bio-Wertstoff über einen Förderer (11) zu einem Magnetabscheider (12). Der von abgeschiedenen Fremdstoffen befreite Bio-Wertstoff wird in einer nachfolgenden Mühle mit Zyklon und Zellradschleuse (B) verarbeitet. Der getrocknete und vermahlene Bio-Wertstoff gelangt über Förderer (14,15), zu einem Trommelsieb mit Austragung (16). Wahlweise kann das Endprodukt, der getrocknete und vermahlene Bio-Wertstoff, auch pelletiert werden.

Hierfür wird der getrocknete und vermahlene Bio-Wertstoff über einen Förderer (17) einer Pelletierpresse zugeführt.

Das Endprodukt aus der Verarbeitung und Behandlung des Bio-Wertstoffes ist ein biologisch stabiles, d.h. durch die Wärmebehandlung entkeimtes und von sonstigen Kleinstlebewesen durch Abtöten befreites Gut, das als Düngerzugabe, Futtermittel oder Bio-Heizmaterial verwendet werden kann.

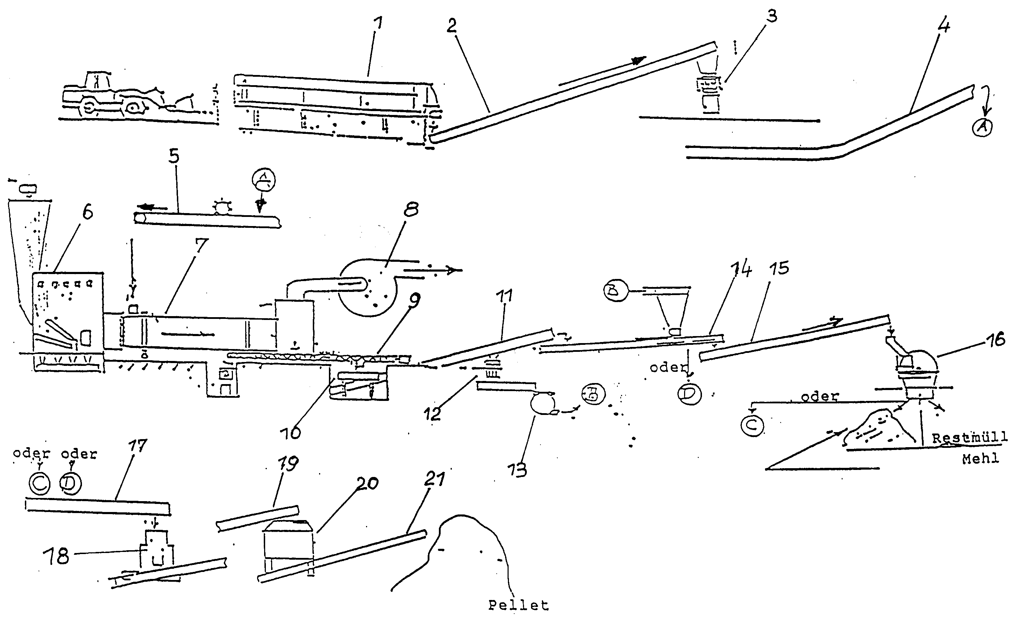

## Patentansprüche

1. Verfahren zur Aufbereitung von vorwiegend im kommunalen Bereich durch Bio-Abfallsammlungen als Bio-Wertstoffe anfallenden, aus überwiegend pflanzlichen Stoffen bestehenden Abfallprodukten und von aus pflanzlichen Stoffen hergestellten und für die menschliche Ernährung nicht mehr verwendbaren Produkten zu wiederverwertbaren Stoffen, **dadurch gekennzeichnet**, daß der Bio-Wertstoff vor seiner Verarbeitung zerkleinert wird, dann dieser zerkleinerte Bio-Wertstoff mit biologischen Trägerstoffen vermischt wird, anschließend der Wassergehalt dieser Mischsubstanz auf 8 % bis 10 % reduziert wird, die getrocknete Mischsubstanz aus eingesetzten Bio-Wertstoffen und zugesetzten Bio-Trägerstoffen vermahlen wird und anschließend die getrocknete und vermahlene Mischsubstanz über Metallabscheider, Windsichter und Trommelsiebe in verwertbare und nicht verwertbare Fraktionen zerlegt wird.

2. Verfahren zur Aufbereitung von als Bio-Wertstoffe anfallenden, aus vorwiegend pflanzlichen Stoffen bestehenden Abfallprodukten und von aus pflanzlichen Stoffen hergestellten Produkten zu wiederverwertbaren Stoffen, **dadurch gekennzeichnet**, daß der Bio-Wertstoff vor seiner Verarbeitung zerkleinert wird, anschließend der Wassergehalt dieses Bio-Wertstoffes auf 8 % bis 10 % reduziert wird, dann die getrocknete Substanz aus eingesetzten Bio-Wertstoffen vermahlen wird und anschließend die getrocknete und vermahlene Substanz über Metallabscheider, Windsichter und Trommelsiebe in verwertbare und nicht verwertbare Fraktionen zerlegt wird.

3. Verfahren nach Anspruch 1 oder 2, **dadurch gekennzeichnet**, daß die gewonnene verwertbare Fraktion granuliert und zu einem Zuschlagstoff für zusammen mit Stalldung oder Gülle auf landwirtschaftlich genutzte Bodenflächen auszubringenden Dünger verarbeitet wird.

4. Verfahren nach Anspruch 1 oder 2, **dadurch gekennzeichnet**, daß die verwertbare Fraktion zu bei der landwirtschaftlichen Feldbestellung auf die Bodenflächen über Düngerstreuer aufzubringendem Granulat verarbeitet wird.

5. Verfahren nach Anspruch 1 oder 2, **dadurch gekennzeichnet**, daß die verwertbare Fraktion zu als Brennstoff in Großfeuerungsanlagen verwendbarem Granulat verarbeitet wird.
